# EUROPEAN PATENT APPLICATION

(11) **EP 4 425 877 A1**
(43) Date of publication of application: **04.09.2024**
(21) Application number: 22934120.1
(22) Date of filing: 30.03.2022
(51) Int. Cl.: H04L 45/24

(54) **PATH SWITCHING METHOD AND APPARATUS, DEVICE, AND MACHINE READABLE STORAGE MEDIUM**

(71) Applicant: New H3C Technologies Co., Ltd., Hangzhou, Zhejiang 310052 (CN)
(72) Inventor: LIANG, Jie, Beijing 100102 (CN)
(74) Representative: Grünecker Patent- und Rechtsanwälte PartG mbB
(86) International application number: PCT/CN2022/084192
(87) International publication number: WO 2023/184269

(57) **Abstract**

Embodiments of the present disclosure provide a path switching method and apparatus, a device and a machine-readable storage medium, where the method includes: after a first path is selected as a main path, and a second path is selected as a backup path, and when it is determined that the first path fails, increasing a first cost value corresponding to the first path; comparing the first cost value corresponding to the first path and a second cost value corresponding to the second path; when the first cost value is greater than the second cost value, selecting the second path as the main path, and selecting the first path as the backup path; when failure of the first path is recovered, comparing the first cost value corresponding to the first path and the second cost value corresponding to the second path; when the first cost value is greater than the second cost value, remaining the second path as the main path, and remaining the first path as the backup path. According to the technical solution of the present disclosure, repeated switching of the main path can be avoided, thereby reducing times of path switching.

## Description

### TECHNICAL FIELD

The present disclosure relates to the technical field of communication, and in particular, to a path switching method and apparatus, a device and a machine-readable storage medium.

### BACKGROUND

Segment routing (SR) adopts a source path selection mechanism, where a source node pre-sets a segment identifier (SID) of a segment through which a message will pass, where the SID is represented by a segment routing label, and when the message passes through a network node, the network node forwards the message according to the segment routing label. Specifically, a forwarding path between the source node and a destination node is denoted as path A, and when sending a message, the source node can acquire the segment routing label corresponding to each network node on path A, encapsulate the segment routing label corresponding to each network node on path A in the message, and send the message through path A, and after receiving the message, each network node on path A can forward the message according to the segment routing label.

When the path A fails, the source node needs to reselect a forwarding path between the source node and the destination node. A process of reselecting the forwarding path will take a period of time, the message cannot be sent during this period, that is, a packet loss problem will occur during this period, which will affect normal forwarding of the message.

### SUMMARY

In a first aspect, the present disclosure provides a path switching method, applied to a source node, where a first path and a second path are presented between the source node and a destination node, and the method includes:
after the first path is selected as a main path, and the second path is selected as a backup path, and when it is determined that the first path fails, increasing a first cost value corresponding to the first path; where the first cost value that is increased is greater than a second cost value corresponding to the second path;
comparing the first cost value corresponding to the first path and the second cost value corresponding to the second value; when the first cost value is greater than the second cost value, selecting the second path as the main path, and selecting the first path as the backup path; and
when failure of the first path is recovered, comparing the first cost value corresponding to the first path and the second cost value corresponding to the second value; when the first cost value is greater than the second cost value, remaining the second path as the main path, and remaining the first path as the backup path.

In a second aspect, the present disclosure provides a path switching apparatus, applied to a source node, where a first path and a second path are presented between the source node and a destination node, and the apparatus includes:
a processing module, configured to, after the first path is selected as a main path, and the second path is selected as a backup path, and when it is determined that the first path fails, increase a first cost value corresponding to the first path; where the first cost value that is increased is greater than a second cost value corresponding to the second path;
a path management module, configured to compare the first cost value corresponding to the first path and the second cost value corresponding to the second value; and when the first cost value is greater than the second cost value, select the second path as the main path, and select the first path as the backup path; and
when failure of the first path is recovered, compare the first cost value corresponding to the first path and the second cost value corresponding to the second value; and when the first cost value is greater than the second cost value, remain the second path as the main path, and remain the first path as the backup path.

In a third aspect, the present disclosure provides a source node device, including: a processor and a machine-readable storage medium, where the machine-readable storage medium stores a machine-executable instruction executable by the processor; the processor is configured to execute the machine-executable instruction, so as to implement the above path switching method.

In a fourth aspect, the present disclosure provides a machine-readable storage medium, where the machine-readable storage medium stores computer instructions, and when the computer instructions are executed by a processor, the above path switching method is implemented.

As can be seen from the above technical solution, in the embodiments of the present disclosure, the first path and the second path are presented between the source node and the destination node, and after the first path is selected as the main path and the second path is selected as the backup path, the source node sends a target message to the destination node through the first path. When the first path fails, the second path is directly switched as the main path, and the first path is switched as the backup path, that is, the source node sends the target message to the destination node through the second path, so as to realize rapid switching of the main path, and a forwarding path between the source node and the destination node does not need to be re-selected, a switching path is calculated in advance, so as to perform backup protection to the main path, increase reliability of message forwarding, avoid packet loss, so that the message can be normally forwarded. When failure of the first path is recovered, the second path is still remained as the main path, and the first path is remained as the backup path, that is, the first path is not switched as the main path, so as to avoid repeated switching of the main path, reduce times of path switching, reduce risk of path switching, reduce risk of packet loss, reduce risk of packet loss during backward path switching or when path quality is poor, reduce influence to the message forwarding due to path switching, and improve reliability of message forwarding.

### BRIEF DESCRIPTION OF DRAWINGS

FIG. 1 is a schematic diagram of hot standby of forwarding paths according to an embodiment of the present disclosure.
FIG. 2 is a schematic diagram of main-backup priority selection of forwarding paths according to an embodiment of the present disclosure.
FIG. 3A-FIG. 3D are flowcharts of a path switching method according to an embodiment of the present disclosure.
FIG. 4 is a structural diagram of a path switching apparatus according to an embodiment of the present disclosure.
FIG. 5 is a hardware structural diagram of a source node device according to an embodiment of the present disclosure.

### DETAILED DESCRIPTION

The terminologies used in the embodiments of the present disclosure are for the purpose of describing specific embodiments only and are not intended to limit the embodiments of the present disclosure. Singular forms "a", "the" and "said" used in the embodiments of the present disclosure and the appended claims are also intended to include plural forms, unless the context clearly indicates other meaning. The term "and/or" as used herein refers to and includes any or all possible combinations of one or more associated listed items.

It should be understood that although the terms "first", "second", "third", etc., may be used to describe various information in the embodiments of the present disclosure, these information should not be limited to these terms. These terms are only used to distinguish a same type of information from each other. For example, without departing from the scope of the embodiments of the present disclosure, first information may also be referred to as second information, and similarly, second information may also be referred to as first information. Depending on context, in addition, word "if' as used herein can be interpreted as "when" or "upon" or "in response to determining".

Segment routing (SR) is also referred to as segmented routing, which adopts a source path selection mechanism, and encapsulates SID (Segment Identifier) of network nodes through which a path passes at the source node, and the SID is represented by a label, which is also referred to as a segment routing label. When a message passes through a network node, the network node forwards the message according to a segment routing label of the message, and network nodes other than a source node do not need to maintain a path state.

For example, a forwarding path between the source node and a destination node is denoted as path A, and when sending a message, the source node can acquire the segment routing label corresponding to each network node on path A, encapsulate the segment routing label corresponding to each network node on path A in the message, and send the message through path A, and after receiving the message, each network node on path A can forward the message according to the segment routing label.

As a new generation of traffic engineering system, segment routing policy can make path planning and selection in network forwarding, provide flexible path selection ways, and meet different forwarding needs of users, which is more and more widely used. SR-TE Policy is an implementation of segment routing strategy, which can implement the segment routing policy based on TE (Traffic Engineering) tunnel.

In the segment routing strategy, candidate paths are an important element of path planning, and each candidate path has a priority, and when there are multiple candidate paths, the candidate path with a highest priority is taken as a forwarding path.

For example, there are a path A and a path B between a source node and a destination node, when a priority of the path A is greater than a priority of the path B, the path A is determined as the forwarding path. In such way, the source node encapsulates segment routing labels corresponding to respective network nodes on the path A into the message, and sends the message through the path A.

When the path A fails, the forwarding path between the source node and the destination node is re-selected, for example, the path B is determined as the forwarding path. In such way, the source node encapsulates segment routing labels corresponding to respective network nodes on the path B into the message, and sends the message through the path B. However, when the forwarding path between the source node and the destination node is re-selected, a process of reselecting the forwarding path will take a period of time, the message cannot be sent during this period, that is, a packet loss problem will occur during this period, which will affect normal forwarding of the message.

In order to improve reliability of message forwarding, in a possible implementation, a backup path can be calculated in advance, and the main path is protected through the backup path. For example, when there are a plurality of candidate paths between the source node and the destination node, a candidate path with a highest priority is determined as the main path, and a candidate path with a second-highest priority is determined as the backup path, and the backup path can be rapidly switched to when the main path fails.

For example, there are a path A and a path B between the source node and the destination node, when a priority of the path A is greater than the priority of the path B, the path A is determined as the main path and the path B is determined as the backup path. When the path A does not fail, the source node encapsulates segment routing labels corresponding to respective network nodes on the path A into the message, and sends the message through the path A. When the path A fails, the source node encapsulates segment routing labels corresponding to respective network nodes on the path B into the message, and sends the message through the path B. Apparently, when the path A fails, the source node can directly send the message through the path B, and does not need to re-select a forwarding path between the source node and the destination node, that is, the backup path is calculated in advance, so as to perform backup protection to the main path, increase reliability of message forwarding, and avoid a problem of packet loss.

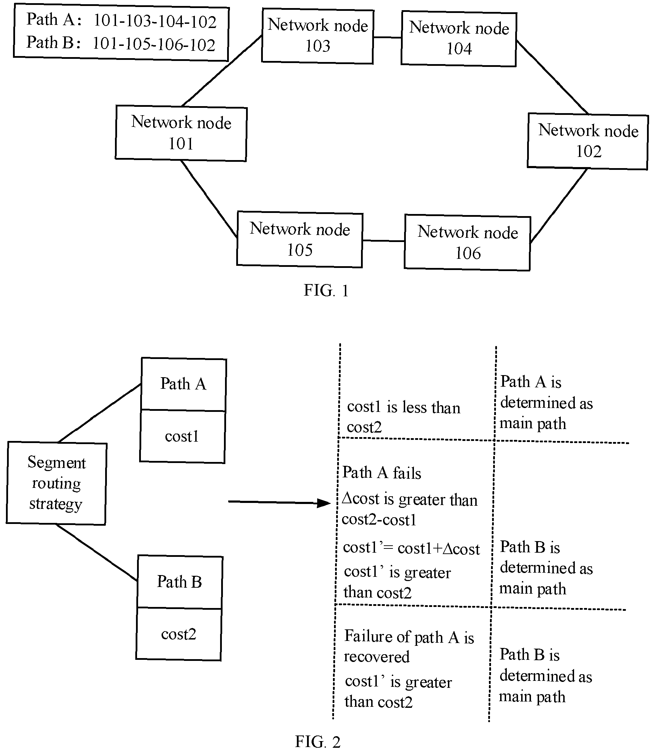

As shown in FIG. 1, FIG. 1 is a schematic diagram of hot backup of a forwarding path. When the source node is a network node 101, and the destination node is a network node 102, two candidate paths can be planned based on the segment routing strategy, where a first candidate path is: the network node 101, a network node 103, a network node 104 and the network node 102 in sequence, and this candidate path can be denoted as a path A; a second candidate path is: the network node 101, a network node 105, a network node 106 and the network node 102, and this candidate path can be denoted as a path B.

In such case, when a priority of the path A is greater than a priority of the path B, the path A is determined as the main path and the path B is determined as the backup path. When the path A does not fail, the network node 101 acquires a segment routing label corresponding to the network node 103, a segment routing label corresponding to the network node 104, and a segment routing label corresponding to the network node 102, and encapsulates the segment routing label corresponding to the network node 103, the segment routing label corresponding to the network node 104, and the segment routing label corresponding to the network node 102 into the message. Based on the segment routing label corresponding to the network node 103, the network node 101 sends the message to the network node 103; based on the segment routing label corresponding to the network node 104, the network node 103 sends the message to the network node 104; based on the segment routing label corresponding to the network node 102, the network node 104 sends the message to the network node 102. When the path A fails, the network node 101 acquires a segment routing label corresponding to the network node 105, a segment routing label corresponding to the network node 106, and a segment routing label corresponding to the network node 102, and based on the above segment routing labels, the message can be successfully sent to the destination node through the path B, which will not be repeated here.

In a possible implementation, when the path A fails, based on the segment routing strategy, the path B will be selected as the main path, that is, the path B switches from the backup path to the main path, and the path A switches from the main path to the backup path, where a process of switching the path A from the main path to the backup path is referred to as forward switching, in such way, since the path B is the main path, the source node will send the message to the destination node through the path B.

When failure of the path A is recovered, based on the segment routing strategy, the path A will be re-selected as the main path, that is, the path A switches from the backup path back to the main path, and the path B switches from the main path back to the backup path, where a process of switching the path A from the backup path back to the main path is referred to as backward switching, in such way, since the path A is the main path, the source node will send the message to the destination node through the path A.

As can be seen from the above, when the path A fails, forwarding of the message is switched to the path B, and when failure of the path A is recovered, forwarding of the message will be immediately switched back to the path A. However, when forwarding of the message is switched back to the path A, some problems are presented: in a process of path switching, packet loss may occur. When the path A has a poor quality and is not stable, after the message is switched back to the path A, the path A may fail again, which will result in frequent switching of the message between the path A and the path B, which will lead to great service influence.

Regarding the above problem, in embodiments of the present disclosure, after the path A is switched from the main path to the backup path, and the path B is switched from the backup path to the main path, a selection manner of main and backup paths is added, so that after failure of the path A is recovered, the message will not be switched back, that is, the path A is still the backup path, and the path B is still the main path, instead of switching the path A from the backup path to the main path and switching the path B from the main path to the backup path. Based on the above processing, influence to the message forwarding caused by path switching can be greatly reduced, reliability of the message forwarding can be improved, packet loss caused by path switching can be avoided, the message does not need to be frequently switched between the path A and the path B, the problem of frequent path switching caused by repeated failure of the path A can be avoided.

To realize non-switching-back of the message, an embodiment of the present disclosure adds a selecting manner of the main and backup paths, and in this selecting manner of the main and backup paths, selection of the main path and the backup path is based on cost value of candidate paths, instead of selecting the main path and the backup path based on priorities of candidate paths. For example, a candidate path with a lowest cost value can be determined as the main path, and a candidate path with a second lowest cost value can be determined as the backup path. When the main path fails, a cost value of the main path can be adjusted based on a cost adjustment value, so that the cost value of the main path increases, and when failure of the main path is recovered, since the cost value of the main path is still greater than a cost value of the backup path, this path will not be re-determined as the main path, so as to avoid backward switching of the message.

As shown in FIG. 1, when the source node is the network node 101, and the destination node is the network node 102, two candidate paths can be planned, which are path A and path B, a cost value corresponding to the path A and a cost value corresponding to a path B can be determined. When the cost value corresponding to the path A is less than the cost value corresponding to the path B, the path A is determined as the main path and the path B is determined as the backup path; when the cost value corresponding to the path B is less than the cost value corresponding to the path A, the path B is determined as the main path and the path A is determined as the backup path.

As shown in FIG. 2, FIG. 2 is a schematic diagram of main-backup priority selection of forwarding paths. It is assumed that a cost value cost 1 corresponding to the path A is less than a cost value cost2 corresponding to the path B, the path A is determined as the main path and the path B is determined as the backup path. When the path A fails, a cost adjustment value can be determined, where the cost adjustment value is denoted as Δcost, and Δcost is greater than cost2-cost1. Then, the cost value cost1 of the path A is adjusted based on Δcost to obtain an adjusted cost value, and the adjusted cost value is denoted as cost1'. For example, cost1'= cost1+Δcost. Apparently, since cost1' is a sum of cost1 and Δcost, by adjusting the cost value cost1 of the path A based on Δcost, the cost value of the path A can be increased.

In addition, since Δcost is greater than cost2-cost1, cost1' is greater than cost2, that is, the adjusted cost value cost1' corresponding to the path A is greater than the cost value cost 2 corresponding to the path B, thus the path B will be determined as the main path, and the path A will be determined as the backup path, in such way, the message between the source node and the destination node can be forwarded through the path B, thereby realizing switching of the forwarding path.

After failure of the path A is recovered, the cost value corresponding to the path A is still cost1', and cost1' is greater than cost2, thus the path B is remained as the main path and the path A is remained as the backup path, and the message is still forwarded between the source node and the destination node through the path B, instead of switching the forwarding path.

Further, when the path B fails, a cost adjustment value Δcost' can be determined, in a possible implementation, Δcost' is same as Δcost, that is, the cost adjustment value is constant, and the cost adjustment value during each time of path failure is always constant. In another possible implementation, Δcost' and Δcost are different, that is, the cost adjustment value may change, and the cost adjustment value of each path failure may be different, and in such case, Δcost' may be greater than a difference between the cost value cost1' corresponding to the path A and the cost value cost2 corresponding to the path B, that is, Δcost' is greater than cost1'-cost2. The cost value cost2 is adjusted based on Δcost' to obtain an adjusted cost value, and the adjusted cost value is denoted as cost2'. For example, cost2'=cost2+Δcost'. Apparently, since cost2' is a sum of cost2 and Δcost', and Δcost' is greater than cost1'-cost2, cost2' is greater than cost1', that is, the adjusted cost value cost2' corresponding to the path B is greater than the cost value cost1' corresponding to the path A, thus, the path A is determined as the main path, and the path B is determined as the backup path, thereby realizing switching of the forwarding path.

As described above, after failure of the path A is recovered, the forwarding path is not switched, and the path A is still the backup path, and the forwarding path will be switched and the path A will be re-selected as the main path only if the path B fails. Similarly, after failure of the path B is recovered, the path B will still be the backup path until the path A fails again, the path B will be determined as the main path after the path A fails again, and so on.

As can be seen from the above, when failure of the path A is recovered, the path B is still remained as the main path and the path A is remained as the backup path, that is, the path A is not switched to the main path, so as to avoid repeated switching of the main path, reduce times of path switching, reduce risk of packet loss of service, reduce risk of packet loss during path backward switching or when path quality is poor, reduce influence to the message forwarding caused by the path switching, and improve reliability of message forwarding.

In the following, the technical solution of the embodiments of the present disclosure will be described with reference to specific embodiments.

An embodiment of the present disclosure provides a path switching method, which may be applied to a network adopting segment routing technology to realize message transmission, and an application scenario is not limited. The network may include a plurality of network nodes (such as routers and switches, etc.), and these network nodes at least include a source node, an intermediate node and a destination node.

The source node is an incoming node of the forwarding path, that is, a first network node of the forwarding path, and the source node supports the segment routing technology; the destination node is an outgoing node of the forwarding path, that is, a last network node of the forwarding path, and the destination node supports the segment routing technology; the intermediate node is a network node between the source node and the destination node of the forwarding path, and the intermediate node supports the segment routing technology.

There are at least two paths between the source node and the destination node, and when there are two paths between the source node and the destination node, the two paths are denoted as a first path and a second path, and when there are multiple (three or more) paths between the source node and the destination node, two paths that can be determined as the main path and the backup path are selected from the multiple paths, and the two paths are denoted as the first path and the second path.

As shown in FIG. 1, FIG. 1 is a schematic diagram of an applications scenario of an embodiment of the present disclosure. The first path may be path A, and the second path may be path B, or the first path may be path B, and the second path may be path A.

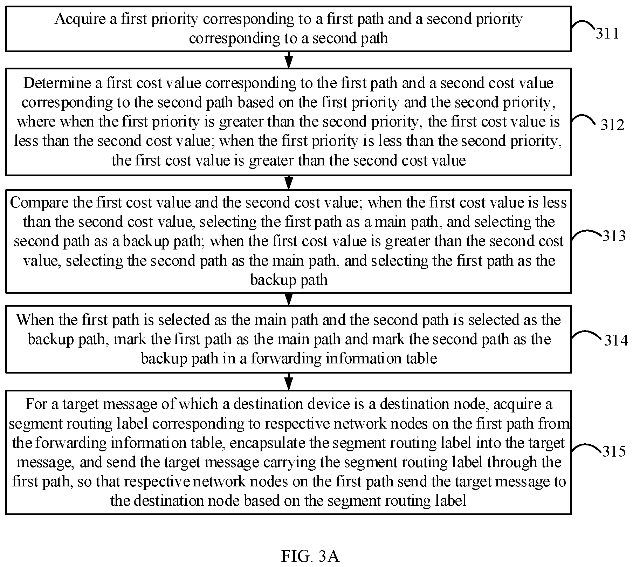

In a possible implementation, when segment routing needs to be adopted to realize message forwarding, for the source node, the main path and the backup path can be selected, and the message forwarding is realized through the main path. As shown in FIG. 3A, FIG. 3A is a schematic flowchart of a path switching method, where the method may include:

At block 311, acquiring a first priority of a first path and a second priority of a second path.

For example, as shown in FIG. 1, it is taken as an example that path A is the first path and path B is the second path, the first priority corresponding to the path A and the second priority corresponding to the path B can be acquired, where the first priority and the second priority may be pre-configured, or may be acquired by adopting a certain algorithm, which is not limited, as long as the first priority and the second priority can be acquired.

At block 312, determining a first cost value corresponding to the first path and a second cost value corresponding to the second path based on the first priority and the second priority. When the first priority is greater than the second priority, the first cost value is less than the second cost value; when the first priority is less than the second priority, the first cost value is greater than the second cost value.

For example, based on the first priority corresponding to path A and the second priority corresponding to path B, the first cost value corresponding to path A and the second cost value corresponding to path B can be determined, where a determining manner thereof is not limited here, as long as when the first priority is greater than the second priority, the first cost value is less than the second cost value, and when the first priority is less than the second priority, the first cost value is greater than the second cost value.

For convenience of description, in the present embodiment, it is taken as an example that the first cost value corresponding to path A is less than the second cost value corresponding to path B, the first cost value is denoted as cost1, and the second cost value is denoted as cost2.

At block 313, comparing the first cost value and the second cost value; when the first cost value is less than the second cost value, selecting the first path as a main path, and selecting the second path as a backup path; when the first cost value is greater than the second cost value, selecting the second path as the main path, and selecting the first path as the backup path.

For example, based on the first cost value cost1 and the second cost value cost2, when the first cost value cost1 is less than the second cost value cost2, path A is selected as the main path and path B is selected as the backup path.

For example, in the segment routing strategy, a FLAG (i.e., a flag bit of the segment routing strategy) can also be set for each path. After path A is selected as the main path and path B is selected as the backup path, a FLAG corresponding to path A is V/A, where "V" is used to indicate that path A is a valid path, that is, it can transmit messages, and "A" is used to indicate that path A is the main path. A FLAG corresponding to path B is V/B, where "V" is used to indicate that path B is a valid path, and "B" is used to indicate that path B is the backup path.

At block 314, when the first path is selected as the main path and the second path is selected as the backup path, marking the first path as the main path and marking the second path as the backup path in a forwarding information table.

For example, the source node can maintain the forwarding information table, as shown in table 1, table 1 is an example of a forwarding information table, the forwarding information table may include a matching item, a segment routing label, and a mapping relation between an outgoing interface and a character. Certainly, table 1 is only an example, content of the forwarding information table is not limited.

**Table 1**

| Matching item | Segment routing label | Outgoing interface | Character |
|---|---|---|---|
| S1 | S11 | S12 | Main path |
| | S13 | S14 | Backup path |
| ... | ... | ... | ... |

In table 1, matching item S1 may be IP address or IP network segment, that is, IP address or IP segment corresponding to the destination node. A message matched with the IP address and the IP network segment can be forwarded through the forwarding information table corresponding to the matching item S1. Alternatively, the matching item S1 may be an identifier of the segment routing strategy, and in addition to the forwarding information table, the source node can further maintain a routing table, where a matching item of the routing table may be IP address or IP network segment, an outgoing interface of the routing table is an identifier of the segment routing strategy. For a message matched with the IP address or the IP network segment, the identifier of the segment routing strategy can be found according to the routing table, and the forwarding information table can be searched according to the identifier of the segment routing strategy to find the matching item S1, and the message is forwarded according to the forwarding information table corresponding to the matching item S1.

S11 is a segment routing label corresponding to respective network node on path A, for example, a segment routing label corresponding to the network node 103, a segment routing label corresponding to the network node 104, a segment routing label corresponding to the network node 102. S13 is a segment routing label corresponding to respective network node on path B, for example, a segment routing label corresponding to the network node 105, a segment routing label corresponding to the network node 106, a segment routing label corresponding to the network node 102.

S12 is a port corresponding to path A, that is, the port connected to the network node 103 on the network node 101, and S14 is a port corresponding to path B, that is, the port connected to the network node 105 on the network node 101.

At block 314, a character corresponding to path A in the forwarding information table is marked as the main path, and a character corresponding to path B in the forwarding information table is marked as the backup path, as shown in table 1.

At block 315, for a target message of which a destination device is a destination node, acquiring a segment routing label corresponding to respective network nodes on the first path from the forwarding information table, encapsulating the segment routing label into the target message, and sending the target message carrying the segment routing label through the first path, so that respective network nodes on the first path send the target message to the destination node based on the segment routing label.

For example, after the source node receives the target message of which the destination device is the destination node, that is, a destination IP address of the target message matches with an IP address or an IP network segment corresponding to the destination node, since path A is marked as the main path in the forwarding information table, the segment routing label (i.e., the segment routing label S11) corresponding to respective network nodes on path A is acquired from the forwarding information table, the segment routing label is encapsulated into the target message, and the target message carrying the segment routing label is sent through path A (i.e., the outgoing interface S12), so that respective network nodes on path A send the target message to the destination node based on the segment routing label, and the sending process will not be described in detail here.

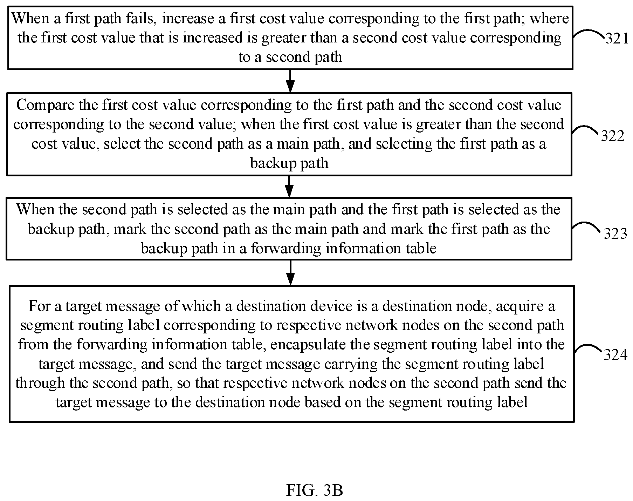

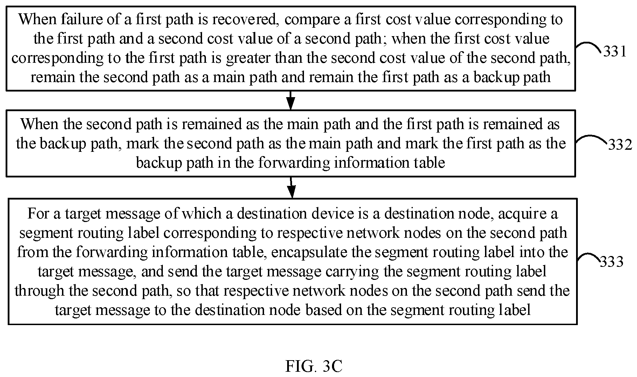

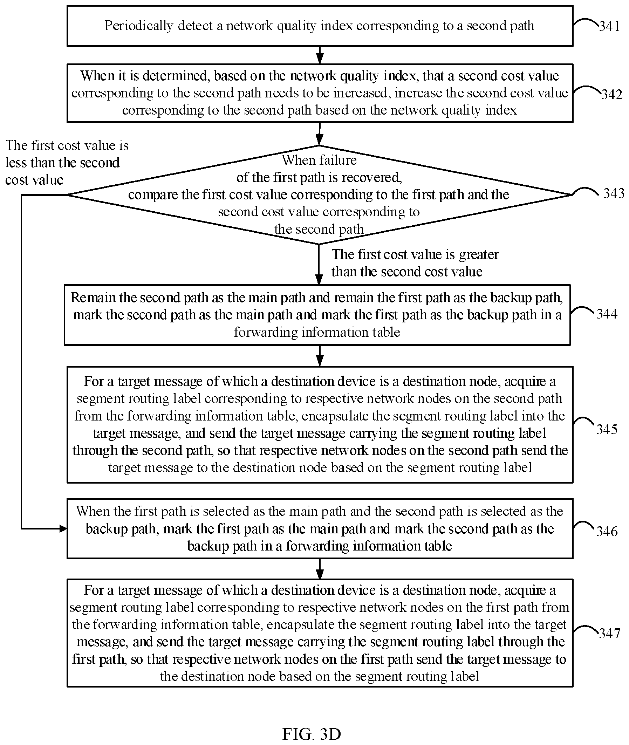

In a possible implementation, after the first path is selected as the main path and the second path is selected as the backup path, when the first path fails, the main path and the backup path can be re-selected, and for this process, as shown in FIG. 3B, FIG. 3 is a schematic flowchart of a path switching method, where the method may include:
At block 321, when a first path fails, increasing a first cost value corresponding to the first path; where the first cost value that is increased is greater than a second cost value corresponding to a second path.

Illustratively, when increasing the first cost value corresponding to the first path, a cost adjustment value can be determined based on the first cost value corresponding to the first path and the second cost value corresponding to the second path, and the cost adjustment value is greater than a difference between the second cost value and the first cost value; based on this, the first cost value corresponding to the first path can be increased based on the cost adjustment value to obtain the first cost value that is increased.

For example, the first cost value corresponding to the first path is denoted as cost1, the second cost value corresponding to the second path is denoted as cost2, and the cost adjustment value is denoted as Δcost, the first cost value that is increased is denoted as cost1', then when path A fails, Δcost is greater than cost2-cost1, cost1'=cost1+Δcost.

At block 322, comparing the first cost value (that is, the first cost value that is increased) corresponding to the first path and the second cost value corresponding to the second value; when the first cost value is greater than the second cost value, selecting the second path as a main path, and selecting the first path as a backup path.

For example, since Δcost is greater than cost2-cost1, and cost1'=cost1+Δcost, cost1' is greater than cost2, that is, path B can be selected as the main path and path A can be selected as the backup path.

Illustratively, after path B is selected as the main path and path A is selected as the backup path, in the segment routing strategy, the FLAG corresponding to path B is V/A, where "A" is used to represent that path B is the main path, and the FLAG corresponding to path A is V/B, where "B" is used to represent that path A is the backup path.

At block 323, when the second path is selected as the main path and the first path is selected as the backup path, marking the second path as the main path and marking the first path as the backup path in a forwarding information table.

As shown in table 2, table 2 is an example of a forwarding information table, the forwarding information table includes a matching item, a segment routing label, and a mapping relation between an outgoing interface and a character. The matching item, segment routing label and outgoing interface can be referred to block 314, which will not be repeated here. At block 323, a character corresponding to path B in the forwarding information table is marked as the main path, and a character corresponding to path A in the forwarding information table is marked as the backup path.

**Table 2**

| Matching item | Segment routing label | Outgoing interface | Character |
|---|---|---|---|
| S1 | S11 | S12 | Backup path |
| | S13 | S14 | Main path |
| ... | ... | ... | ... |

At block 324, for a target message of which a destination device is a destination node, acquiring a segment routing label corresponding to respective network nodes on the second path from the forwarding information table, encapsulating the segment routing label into the target message, and sending the target message carrying the segment routing label through the second path, so that respective network nodes on the second path send the target message to the destination node based on the segment routing label.

For example, after the source node receives the target message of which the destination device is the destination node, since path B is marked as the main path in the forwarding information table, the segment routing label (i.e., the segment routing label S13) corresponding to respective network nodes on path B is acquired from the forwarding information table, the segment routing label is encapsulated into the target message, and the target message carrying the segment routing label is sent through path B (i.e., the outgoing interface S14), so that respective network nodes on path B send the target message to the destination node based on the segment routing label.

In a possible implementation, when the first path fails, the first path is selected as the backup path and the second path is selected as the main path, and when failure of the first path is recovered, the main path and the backup path are re-selected. As shown in FIG. 3C, FIG. 3C is a schematic flowchart of a path switching method, where the method includes:
At block 331, when failure of a first path is recovered, comparing a first cost value corresponding to the first path and a second cost value of a second path; when the first cost value corresponding to the first path is greater than the second cost value of the second path, remaining the second path as a main path and remaining the first path as a backup path.

For example, referring to the above embodiments, the first cost value corresponding to path A is cost1', the second cost value corresponding to path B is cost2, and cost1' is greater than cost2, when failure of path A is recovered, since cost1' is still greater than cost2, path B is remained as the main path and path A is remained as the backup path.

At block 332, when the second path is remained as the main path and the first path is remained as the backup path, the second path is marked as the main path and the first path is marked as the backup path in the forwarding information table.

At block 333, for a target message of which a destination device is a destination node, acquiring a segment routing label corresponding to respective network nodes on the second path from the forwarding information table, encapsulating the segment routing label into the target message, and sending the target message carrying the segment routing label through the second path, so that respective network nodes on the second path send the target message to the destination node based on the segment routing label.

In a possible implementation, when the first path fails, the first path is selected as the backup path and the second path is selected as the main path, and when failure of the first path is recovered, the main path and the backup path are re-selected. As shown in FIG. 3D, FIG. 3D is a schematic flowchart of a path switching method, where the method includes:
At block 341, after a first path is selected as a backup path and a second path is selected as a main path, periodically detecting a network quality index corresponding to the second path, where the network quality index may include, but is not limited to, at least one of: a time delay, a packet loss rate, jitter, etc., which is not limited herein, and the packet loss rate is taken as an example in the following.
At block 342, when it is determined, based on the network quality index, that a second cost value corresponding to the second path needs to be increased, increasing the second cost value corresponding to the second path based on the network quality index. When it is determined, based on the network quality index, that the second cost value corresponding to the second path does not need to be increased, the second cost value is remained unchanged.

In a possible implementation, when the network quality index is greater than a preset threshold, it is determined that the second cost value corresponding to the second path needs to be increased, and the second cost value corresponding to the second path is increased based on a cost adjustment value, where the cost adjustment value is greater than a difference between the first cost value corresponding to the first path and the second cost value corresponding to the second path. When the network quality index is not greater than the preset threshold, it is determined that the second cost value corresponding to the second path does not need to be increased, that is, the second cost value corresponding to the second path is remained unchanged.

For example, referring to the above embodiments, the first cost value corresponding to path A is cost1', the second cost value corresponding to path B is cost2, and when a packet loss rate corresponding to path B is greater than a preset packet loss rate, it is determined that the second cost value corresponding to path B needs to be increased, and the cost adjustment value Δcost is determined, where the cost adjustment value Δcost needs to be greater than a difference between the first cost value cost1' and the second cost value cost2, that is, Δcost is greater than cost1'-cost2.

The second cost value corresponding to path B can be increased based on the cost adjustment value Δcost, that is, the second cost value that is increased is a sum of the second cost value not being increased and Δcost, for example, the second cost value that is increased is denoted as cost2', then cost2'=cost2+Δcost. Apparently, since Δcost is greater than cost1'-cost2, the second cost value cost2' that is increased will be greater than the first cost value cost1' corresponding to path A.

In another possible implementation, when the network quality index is greater than a preset first threshold and is less than a preset second threshold, where the preset first threshold may be less than the preset second threshold, it is determined that the second cost value corresponding to the second path needs to be increased, and the second cost value corresponding to the second path is increased based on a first cost adjustment value, where the first cost adjustment value is less than a difference between the first cost value corresponding to the first path and the second cost value corresponding to the second path. When the network quality index is not less than the preset second threshold, it is determined that the second cost value corresponding to the second path needs to be increased, and the second cost value corresponding to the second path is increased based on a second cost adjustment value, where the second cost adjustment value is greater than a difference between the first cost value corresponding to the first path and the second cost value corresponding to the second path. When the network quality index is not greater than the preset first threshold, it is determined that the second cost value corresponding to the second path does not need to be increased, that is, the second cost value corresponding to the second path is remained unchanged.

For example, when the packet loss rate corresponding to path B is greater than a preset first packet loss rate threshold and is less than a preset second packet loss rate threshold, it is determined that the second cost value corresponding to path B needs to be increased, and the first cost adjustment value Δcost1 is determined, and Δcost1 needs to be less than a difference between the first cost value cost1' and the second cost value cost2. The second cost value corresponding to path B is increased based on Δcost1, for example, the second cost value that is increased is denoted as cost2', then cost2'=cost2+Δcost1. Since Δcost1 is less than cost1'-cost2, cost2' is less than cost1'. Since the packet loss rate corresponding to path B is periodically detected, for a first time that the packet loss rate corresponding to path B is detected to be greater than the preset first packet loss rate threshold and less than the preset second packet loss rate threshold, cost2' will be less than cost1'. However, when the packet loss rate corresponding to path B is detected to be greater than the preset first packet rate threshold and less than the preset second packet loss rate threshold for multiple times, the second cost value corresponding to path B may be greater than cost1'.

For another example, when the packet loss rate corresponding to path B is not less than the preset second packet loss rate threshold, it is determined that the second cost value corresponding to path B needs to be increased, and the second cost adjustment value Δcost2 is determined, and Δcost2 needs to be greater than a difference between the first cost value cost1' and the second cost value cost2. The second cost value corresponding to path B is increased based on Δcost2, for example, the second cost value that is increased is denoted as cost2', then cost2'=cost2+Δcost2. Since Δcost2 is greater than cost1'-cost2, cost2' is greater than cost1'.

At block 343, when failure of the first path is recovered, comparing the first cost value corresponding to the first path and the second cost value corresponding to the second path; when the first cost value is greater than the second cost value, block 344 can be performed; or, when the first cost value is less than the second cost value, block 346 can be performed.

For example, after the first path is selected as the backup path and the second path is selected as the main path, when the second cost value corresponding to the second path is not adjusted to be increased, the first cost value will be greater than the second cost value. When the second cost value corresponding to the second path is adjusted to be increased, the first cost value may be greater than the second cost value, or the first cost value may be less than the second cost value.

At block 344, when the second path is remained as the main path and the first path is remained as the backup path, the second path is marked as the main path and the first path is marked as the backup path in a forwarding information table.

At block 345, for a target message of which a destination device is a destination node, acquiring a segment routing label corresponding to respective network nodes on the second path from the forwarding information table, encapsulating the segment routing label into the target message, and sending the target message carrying the segment routing label through the second path, so that respective network nodes on the second path send the target message to the destination node based on the segment routing label.

At block 346, when the first path is selected as the main path and the second path is selected as the backup path, marking the first path as the main path and marking the second path as the backup path in a forwarding information table.

At block 347, for a target message of which a destination device is a destination node, acquiring a segment routing label corresponding to respective network nodes on the first path from the forwarding information table, encapsulating the segment routing label into the target message, and sending the target message carrying the segment routing label through the first path, so that respective network nodes on the first path send the target message to the destination node based on the segment routing label.

As can be seen from the above technical solution, in the embodiments of the present disclosure, the first path and the second path are presented between the source node and the destination node, and after the first path is selected as the main path and the second path is selected as the backup path, the source node sends a target message to the destination node through the first path. When the first path fails, the second path is directly switched as the main path, and the first path is switched as the backup path, that is, the source node sends the target message to the destination node through the second path, so as to realize rapid switching of the main path, and a forwarding path between the source node and the destination node does not need to be re-selected, a switching path is calculated in advance, so as to perform backup protection to the main path, increase reliability of message forwarding, avoid packet loss, so that the message can be normally forwarded. When failure of the first path is recovered, the second path is still remained as the main path, and the first path is remained as the backup path, that is, the first path is not switched as the main path, so as to avoid repeated switching of the main path, reduce times of path switching, reduce risk of path switching, reduce risk of packet loss, reduce risk of packet loss during backward path switching or when path quality is poor, reduce influence to the message forwarding due to path switching, and improve reliability of message forwarding.

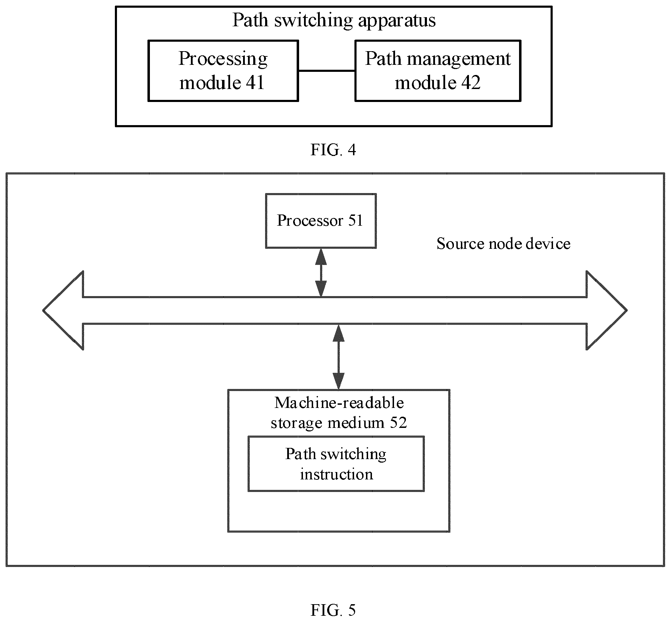

Correspondingly, based on a same application concept as the above method, embodiments of the present disclosure further provide a path switching apparatus, applied to a source node, where a first path and a second path are presented between the source node and a destination node. As shown in FIG. 4, FIG. 4 is a structural diagram of the path switching apparatus, where the apparatus includes:
a processing module 41, configured to, after the first path is selected as a main path, and the second path is selected as a backup path, and when it is determined that the first path fails, increase a first cost value corresponding to the first path; where the first cost value that is increased is greater than a second cost value corresponding to the second path;
a path management module 42, configured to compare the first cost value corresponding to the first path and the second cost value corresponding to the second value; and when the first cost value is greater than the second cost value, select the second path as the main path, and select the first path as the backup path; and
when failure of the first path is recovered, compare the first cost value corresponding to the first path and the second cost value corresponding to the second value; and when the first cost value is greater than the second cost value, remain the second path as the main path, and remain the first path as the backup path.

Illustratively, when selecting the first path as the main path and selecting the second path as the backup path, the processing module 41 is specifically configured to: acquire a first priority of the first path and a second priority of the second path; determine the first cost value of the first path and the second cost value of the second path based on the first priority and the second priority; where when the first priority is greater than the second priority, the first cost value is less than the second cost value; and compare the first cost value and the second cost value; when the first cost value is less than the second cost value, select the first path as the main path, and select the second path as the backup path.

Illustratively, when increasing the first cost value corresponding to the first path, the path management module 42 is specifically configured to: determine a cost adjustment value based on the first cost value corresponding to the first path and the second cost value corresponding to the second path, where the cost adjustment value is greater than a difference between the second cost value and the first cost value; and increase the first cost value corresponding to the first path based on the cost adjustment value.

Illustratively, the path management module 42 is further configured to: when failure of the first path is recovered, and when the first cost value corresponding to the first path is less than the second cost value corresponding to the second path, select the first path as the main path, and select the second path as the backup path.

Illustratively, the path management module 42 is further configured to: after the second path is the main path and the first path is the backup path, periodically detect a network quality index corresponding to the second path; and when it is determined, based on the network quality index, that the second cost value corresponding to the second path needs to be increased, increase the second cost value corresponding to the second path based on the network quality index.

Illustratively, when increasing the second cost value corresponding to the second path based on the network quality index, the path management module 42 is specifically configured to: when the network quality index is greater than a preset threshold, increase the second cost value corresponding to the second path based on a cost adjustment value, where the cost adjustment value is greater than a difference between the first cost value and the second cost value; or, when the network quality index is greater than a preset first threshold and is less than a preset second threshold, increase the second cost value corresponding to the second path based on a first cost adjustment value, where the first cost adjustment value is less than a difference between the first cost value and the second cost value; or, when the network quality index is not less than the preset second threshold, increasing the second cost value corresponding to the second path based on a second cost adjustment value, where the second cost adjustment value is greater than the difference between the first cost value and the second cost value.

Based on a same application concept as the above method, embodiments of the present disclosure provide a source node device. As shown in FIG. 5, the source node device may include: a processor 51 and a machine-readable storage medium 52, where the machine-readable storage medium 52 stores a machine-executable instruction executable by the processor 51; the processor 51 is configured to execute the machine-executable instruction, so as to implement the above exemplary path switching method of the present disclosure.

Based on a same application concept as the above method, embodiments of the present disclosure further provide a machine-readable storage medium, where the machine-readable storage medium stores computer instructions, and when the computer instructions are executed by a processor, the above exemplary path switching method of the present disclosure is implemented.

The machine-readable storage medium can be any electronic, magnetic, optical or other physical storage device, and can contain or store information, such as executable instructions, data, and the like. For example, the machine-readable storage medium may include: RAM (Random Access Memory), volatile memory, nonvolatile memory, flash memory, storage drive (such as hard disk drive), solid state disk, any type of storage disk (such as optical disk, dvd, etc.), or similar storage medium, or a combination thereof.

The system, apparatus, module or unit set forth in the above embodiments can be realized by computer chips or entities, or by products with certain functions. A typical implementation device is a computer, and the specific form of the computer can be a personal computer, a laptop computer, a cellular phone, a camera phone, a smart phone, a personal digital assistant, a media player, a navigation device, an email transceiver, a game console, a tablet computer, a wearable device or a combination of any of these devices.

For convenience of description, when describing the above apparatuses, the functions are divided into various units and described separately. Apparently, the functions of each unit can be realized in one or more pieces of software and/or hardware when the application is implemented.

It should be understood by those skilled in the art that embodiments of the present disclosure can be provided as a method, a system, or a computer program product. Therefore, the present disclosure can take a form of an entirely hardware embodiment, an entirely software embodiment, or an embodiment combining software and hardware aspects. Furthermore, embodiments of the present disclosure may take a form of computer program products implemented on one or more computer-usable storage medium (including but not limited to disk storage, CD-ROM, optical storage, etc.) containing computer-usable program codes.

The present disclosure is described with reference to flowcharts and/or block diagrams of methods, devices (systems), and computer program products according to embodiments of the present disclosure. It should be understood that each flow and/or block in the flowchart and/or block diagram, and combinations of the flow and/or block in the flowchart and/or block diagram can be implemented by computer program instructions. These computer program instructions may be provided to a processor of a general-purpose computer, special-purpose computer, embedded processor or other programmable data processing apparatus to produce a machine, such that the instructions which are executed by the processor of the computer or other programmable data processing apparatus produce means for implementing the functions specified in the flowchart flow or flows and/or block or blocks in the block diagram.

Moreover, these computer program instructions can also be stored in a computer-readable memory that can direct a computer or other programmable data processing apparatus to work in a specific manner, so that the instructions stored in the computer-readable memory produce an article of manufacture including instruction means that implement the functions specified in one flow or multiple flows of the flowchart and/or one block or multiple blocks of the block diagram.

These computer program instructions may also be loaded onto a computer or other programmable data processing apparatus, such that a series of operational steps are performed on the computer or other programmable apparatus to produce a computer-implemented process, such that the instructions executed on the computer or other programmable apparatus provide steps for implementing the functions specified in the flowchart flow or flows and/or block or blocks of the block diagram.

The above are only embodiments of the present disclosure, and are not used to limit the present disclosure. Various modifications and variations of the present disclosure may be presented for those skilled in the art. Any modification, equivalent substitution, improvement, etc. made within the spirit and principle of the present disclosure should be included in the scope of the claims of the present disclosure.

## Claims

1. A path switching method, applied to a source node, wherein a first path and a second path are presented between the source node and a destination node, and the method comprises:
after the first path is selected as a main path, and the second path is selected as a backup path, and in response to determining that the first path fails, increasing a first cost value corresponding to the first path; wherein the increased first cost value is greater than a second cost value corresponding to the second path;
comparing the increased first cost value corresponding to the first path and the second cost value corresponding to the second value; when the increased first cost value is greater than the second cost value, selecting the second path as the main path, and selecting the first path as the backup path; and
when failure of the first path is recovered, comparing the increased first cost value corresponding to the first path and the second cost value corresponding to the second value; when the increased first cost value is greater than the second cost value, remaining the second path as the main path, and remaining the first path as the backup path.

2. The method according to claim 1, wherein selecting the first path as the main path and selecting the second path as the backup path comprises:
acquiring a first priority of the first path and a second priority of the second path;
determining the first cost value of the first path and the second cost value of the second path based on the first priority and the second priority; wherein when the first priority is greater than the second priority, the first cost value is less than the second cost value; and
comparing the first cost value and the second cost value; when the first cost value is less than the second cost value, selecting the first path as the main path, and selecting the second path as the backup path.

3. The method according to claim 1, wherein
increasing the first cost value corresponding to the first path comprises:
determining a cost adjustment value based on the first cost value corresponding to the first path and the second cost value corresponding to the second path, wherein the cost adjustment value is greater than a difference between the second cost value and the first cost value; and
increasing the first cost value corresponding to the first path based on the cost adjustment value.

4. The method according to claim 1, wherein
when failure of the first path is recovered, and after comparing the increased first cost value corresponding to the first path and the second cost value corresponding to the second value, the method further comprises:
when the increased first cost value corresponding to the first path is less than the second cost value corresponding to the second path, selecting the first path as the main path, and selecting the second path as the backup path.

5. The method according to claim 1 or 4, wherein after the second path is the main path and the first path is the backup path, the method further comprises:
periodically detecting a network quality index corresponding to the second path; and
in response to determining, based on the network quality index, that the second cost value corresponding to the second path needs to be increased, increasing the second cost value corresponding to the second path based on the network quality index.

6. The method according to claim 5, wherein
increasing the second cost value corresponding to the second path based on the network quality index comprises:
when the network quality index is greater than a preset threshold, increasing the second cost value corresponding to the second path based on a cost adjustment value, wherein the cost adjustment value is greater than a difference between the increased first cost value and the second cost value;
or,
when the network quality index is greater than a preset first threshold and is less than a preset second threshold, increasing the second cost value corresponding to the second path based on a first cost adjustment value, wherein the first cost adjustment value is less than a difference between the increased first cost value and the second cost value; or, when the network quality index is not less than the preset second threshold, increasing the second cost value corresponding to the second path based on a second cost adjustment value, wherein the second cost adjustment value is greater than the difference between the increased first cost value and the second cost value.

7. A path switching apparatus, applied to a source node, wherein a first path and a second path are presented between the source node and a destination node, and the apparatus comprises:
a processing module, configured to, after the first path is selected as a main path, and the second path is selected as a backup path, and in response to determining that the first path fails, increase a first cost value corresponding to the first path; wherein the increased first cost value is greater than a second cost value corresponding to the second path;
a path management module, configured to compare the increased first cost value corresponding to the first path and the second cost value corresponding to the second value; and when the increased first cost value is greater than the second cost value, select the second path as the main path, and select the first path as the backup path; and
when failure of the first path is recovered, compare the increased first cost value corresponding to the first path and the second cost value corresponding to the second value; and when the increased first cost value is greater than the second cost value, remain the second path as the main path, and remain the first path as the backup path.

8. The apparatus according to claim 7, wherein
when selecting the first path as the main path and selecting the second path as the backup path, the processing module is specifically configured to: acquire a first priority of the first path and a second priority of the second path; determine the first cost value of the first path and the second cost value of the second path based on the first priority and the second priority; wherein when the first priority is greater than the second priority, the first cost value is less than the second cost value; and compare the first cost value and the second cost value; when the first cost value is less than the second cost value, select the first path as the main path, and select the second path as the backup path;
when increasing the first cost value corresponding to the first path, the path management module is specifically configured to: determine a cost adjustment value based on the first cost value corresponding to the first path and the second cost value corresponding to the second path, wherein the cost adjustment value is greater than a difference between the second cost value and the first cost value; and increase the first cost value corresponding to the first path based on the cost adjustment value;
the path management module is further configured to: when failure of the first path is recovered, and when the increased first cost value corresponding to the first path is less than the second cost value corresponding to the second path, select the first path as the main path, and select the second path as the backup path;
the path management module is further configured to: after the second path is the main path and the first path is the backup path, periodically detect a network quality index corresponding to the second path; and in response to determining, based on the network quality index, that the second cost value corresponding to the second path needs to be increased, increase the second cost value corresponding to the second path based on the network quality index; and
when increasing the second cost value corresponding to the second path based on the network quality index, the path management module is specifically configured to: when the network quality index is greater than a preset threshold, increase the second cost value corresponding to the second path based on a cost adjustment value, wherein the cost adjustment value is greater than a difference between the increased first cost value and the second cost value; or, when the network quality index is greater than a preset first threshold and is less than a preset second threshold, increase the second cost value corresponding to the second path based on a first cost adjustment value, wherein the first cost adjustment value is less than a difference between the increased first cost value and the second cost value; or, when the network quality index is not less than the preset second threshold, increasing the second cost value corresponding to the second path based on a second cost adjustment value, wherein the second cost adjustment value is greater than the difference between the increased first cost value and the second cost value.

9. A source node device, comprising: a processor and a machine-readable storage medium, wherein the machine-readable storage medium stores a machine-executable instruction executable by the processor; the processor is configured to execute the machine-executable instruction, so as to implement the method steps according to any one of claims 1-6.

10. A machine-readable storage medium, wherein,
the machine-readable storage medium stores computer instructions, and when the computer instructions are executed by a processor, the method steps according to any one of claims 1-6 are implemented.
